# EUROPEAN PATENT APPLICATION

(11) **EP 2 560 302 A1**
(43) Date of publication of application: **20.02.2013**
(21) Application number: 11786020.5
(22) Date of filing: 06.05.2011
(51) Int. Cl.: H04B 10/18, H04B 10/12, H04L 1/22

(54) **METHOD AND DEVICE FOR PASSIVE OPTICAL NETWORK EXTENDING**

(30) Priority: 27.05.2010 CN 201010187511
(71) Applicant: Huawei Technologies Co., Ltd., Shenzhen, Guangdong 518129 (CN)
(72) Inventor: MA, Teng, Shenzhen Guangdong 518129 (CN); HU, Xing, Shenzhen Guangdong 518129 (CN); JIANG, Hongli, Shenzhen Guangdong 518129 (CN)
(74) Representative: Schmitz, Alexander
(86) International application number: PCT/CN2011/073744
(87) International publication number: WO 2011/147248

(57) **Abstract**

A method and a device for PON reach extension, including: obtaining the distance of a working path between a reach extension device and an optical line terminal OLT, and the distance of a protection path between the reach extension device and the optical line terminal OLT; comparing the distance of the working path and the distance of the protection path to obtain a path with a shorter distance and a path with a longer distance; and performing a delay T, on the reach extension device, for data on the path with the shorter distance, so that the time that the data passes through the path with the shorter distance is the same as the time that the data passes through the path with the longer distance. The present invention ensures that the flexibility for adjusting the working path and the protection path in a PON system is relatively good, and in a process of XPON reach extension, when a differential distance between an ONU and the OLT exceeds 20 km, an XPON network can be used normally.

## Description

This application claims priority to Chinese Patent Application No. 201010187511.0, filed with the Chinese Patent Office on May 27, 2010, and entitled "METHOD AND DEVICE FOR PON REACH EXTENSION", which is incorporated herein by reference in its entirety.

### FIELD OF THE INVENTION

The present invention belongs to the field of a network communications technology, and relates to a method and a device for PON reach extension.

### BACKGROUND OF THE INVENTION

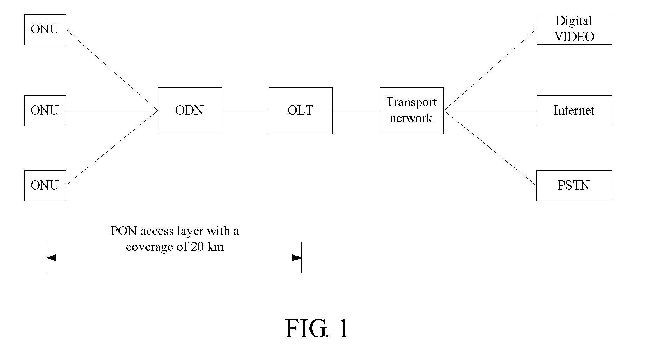

With the emergence of new services such as video on-demand, high-definition television, and online game, user requirements for bandwidth increase day by day. FTTH (Fiber To The Home, developing fiber to the home) may efficiently ensure bandwidth of "a last kilometer" access network. A PON (Passive Optical Network, passive optical network) technology is currently one of the most widely applied FTTH technologies. FIG. 1 shows architecture of a traditional network that uses PON access, where multiple services of users are accessed through the PON and transmitted over a transport network, and can be flexibly connected to different telecommunication service nodes. As shown in FIG. 1, basic components of a PON system include an OLT (Optical Line Terminal, optical line terminal), an ONU (Optical Network Unit, optical network unit), an ODN (Optical Distribution Network, optical distribution network), and so on, where the ODN between the OLT and the ONU includes devices such as a trunk fiber, a passive optical splitter, and a branch fiber. The OLT and the passive optical splitter are connected through the trunk fiber. The passive optical splitter implements optical power distribution of point to multi-point, that is, connecting to multiple ONUs through multiple branch fibers. The direction from the OLT to the ONU is called a downlink direction, and the direction from the ONU to the OLT is called an uplink direction.

In a traditional PON system, the number of ONUs that are connected to the OLT through the passive optical splitter is relatively small, and generally a coverage radius does not exceed 20 km. As a result, the number of the OLT in traditional network architecture is relatively large, location areas are scattered and remote, management and maintenance is inconvenient, and device investment and maintenance cost are relatively high. As a next-generation optical access network emerges, large-scale operators propose requirements for extending the PON to 100 km or even more than 200 km. An XPON over OTN manner which uses a currently existing OTN (Optical Transport Network, optical transport network) for reach extension gradually becomes a mainstream application scene.

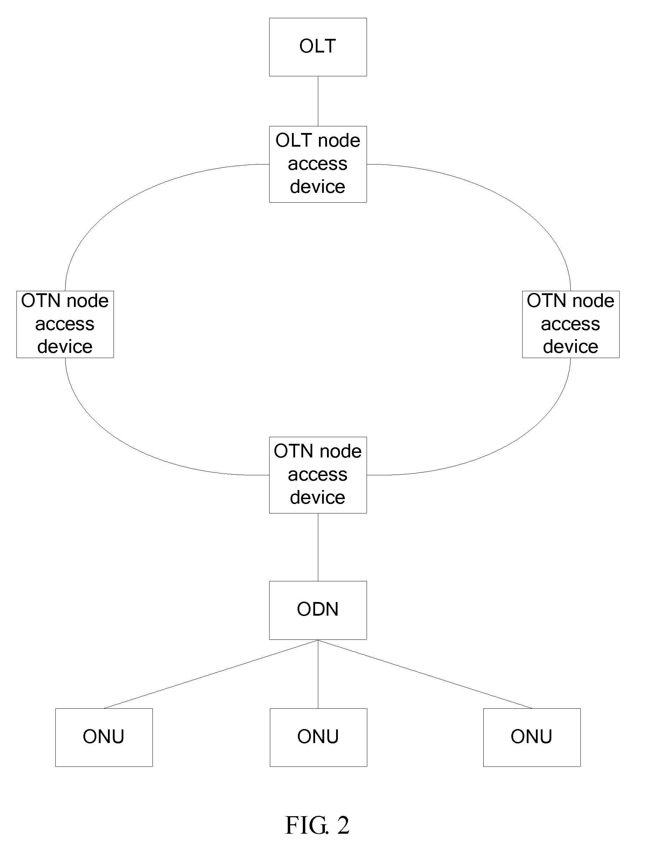

In a reach extension scene of GPON over OTN as shown in FIG. 2, the OLT supports a logical distance of more than 200 km, and the distance difference between its working path and protection path is greater than 170 km, which exceeds a differential distance of 20 km (that is, a difference between the distance from the furthest ONU to the OLT and the distance from the nearest ONU to the OLT) that is supported by the OLT. In addition, in this scene, through an OTN device, the service coverage of a GPON (Gigabit Passive Optical Network, gigabit passive optical network) is enlarged, and a transmission distance is extended. In the downlink direction, GPON downlink data is encapsulated into the OTN network on OLT node access device, and reaches OTN access node through the working path of the OTN network, and the GPON downlink data is decapsulated from the OTN network through the OTN node access device to broadcast to a subsequent ONU; in the uplink direction, uplink data of each ONU is encapsulated into the OTN network through the OTN access node, and reaches the OLT access node through the working path of the OTN network, and the GPON uplink data is decapsulated on the OLT node access device to send it to the OLT. But in the foregoing scene, when protection switching occurs on the OTN, because the distance difference between the working path and the protection path exceeds a maximum differential distance 20 km that is supported by the GPON, the ONU cannot succeed in re-registering in the case that the configuration does not change. In this case, the coverage of the OLT needs to be manually configured, or the OLT differential distance needs to be increased.

During the implementation process of the present invention, the inventor finds that the prior art has at least the following problems:

In the existing system for the PON reach extension, the following problems exist: The flexibility for adjusting the working path and the protection path in the PON system is relatively poor; in the process of XPON reach extension, when the differential distance between the ONU and the OLT exceeds 20 km, the XPON network cannot be used.

### SUMMARY OF THE INVENTION

Embodiments of the present invention provide a method and a device for PON reach extension, where the method and the device ensure that the flexibility for adjusting a working path and a protection path in a PON system is relatively good, and in the process of XPON reach extension, when a differential distance between an ONU and an OLT exceeds 20 km, an XPON network can be used normally.

A method for PON reach extension, where the method includes:
obtaining the distance of a working path between a reach extension device and an optical line terminal OLT, and the distance of a protection path between the reach extension device and the optical line terminal OLT;
comparing the distance of the working path and the distance of the protection path to obtain a path with a shorter distance and a path with a longer distance; and
on the reach extension device, performing a delay T for data on the path with the shorter distance, so that the time that the data passes through the path with the shorter distance is the same as the time that the data passes through the path with the longer distance.

A device for PON reach extension, where the device includes:
a distance measuring unit, configured to obtain the distance of a working path between a reach extension device and an OLT, and the distance of a protection path between the reach extension device and the OLT;
a comparing unit, configured to compare the distance of the working path and the distance of the protection path to obtain a path with a shorter distance and a path with a longer distance; and
a delay unit, configured to, on the reach extension device, perform a delay T for the data on the path with the shorter distance, so that the time that the data passes through the path with the shorter distance is the same as the time that the data passes through the path with the longer distance.

From the technical solutions provided in the foregoing embodiments of the present invention, it may be seen that, through obtaining the distance of the working path between the reach extension device and the OLT, and the distance of the protection path between the reach extension device and the OLT and performing the delay for the data on the path with the shorter distance, flexible adjustment to the distance of the working path and the distance of the protection path in the PON system is realized, and in the process of the XPON reach extension, when the differential distance between the ONU and the OLT exceeds 20 km, the XPON network can be used normally.

### BRIEF DESCRIPTION OF THE DRAWINGS

To describe the technical solutions of the embodiments of the present invention more clearly, the accompanying drawings required for describing the embodiments are briefly introduced in the following. Apparently, the accompanying drawings in the following description are merely some embodiments of the present invention, and persons skilled in the art may further derive other drawings according to these accompanying drawings without any creative effort.
FIG. 1 is a diagram of basic components of a PON system according to the prior art;
FIG. 2 is a schematic diagram of an extension scene of GPON over OTN according to the prior art;
FIG. 3 is a schematic flow chart of a method for PON reach extension according to an embodiment of the present invention;
FIG. 4 is a schematic flow chart of a method for obtaining the distance of a working path and the distance of a protection path through responding to an OLT according to an embodiment of the present invention;
FIG. 5 is a schematic diagram of an OTN node access device responding to a sequence code request of an OLT according to an embodiment of the present invention;
FIG. 6 is a schematic diagram of an ONU sending data through a reach extension device and an OTN according to an embodiment of the present invention;
FIG. 7 is a schematic structural diagram of a device for PON reach extension according to an embodiment of the present invention.

### DETAILED DESCRIPTION OF THE EMBODIMENTS

The technical solutions in the embodiments of the present invention are clearly and completely described in the following with reference to accompanying drawings in the embodiments of the present invention. Apparently, the embodiments described are merely a part of the embodiments of the present invention rather than all of the embodiments. Any other embodiment obtained by persons skilled in the art based on the embodiments in the present invention without any creative effort falls within the protection scope of the present invention.

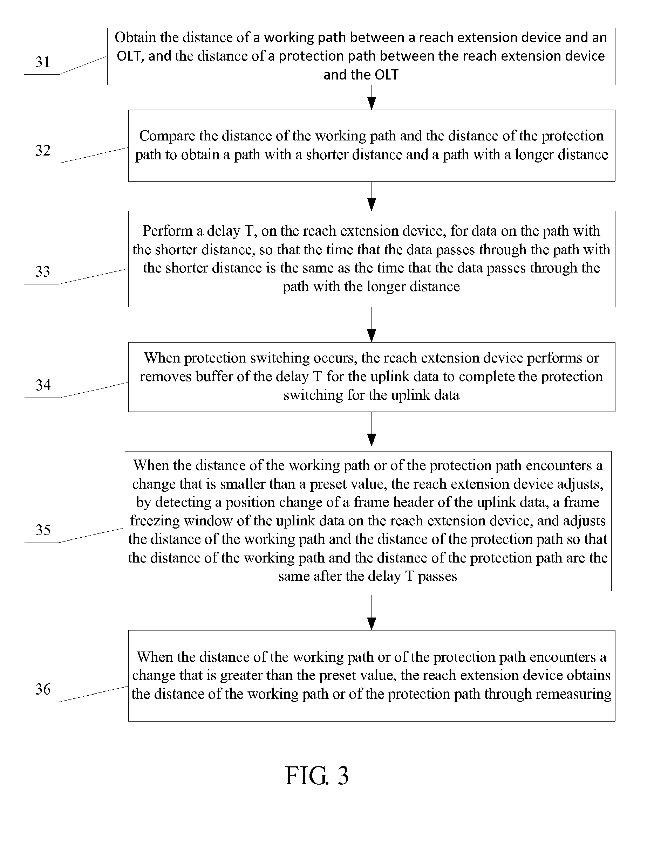

An embodiment of the present invention provides a method for PON reach extension, as shown in FIG. 3, where the method may specifically include:

Step 31: Obtain the distance of a working path between a reach extension device and an OLT, and the distance of a protection path between the reach extension device and the OLT.

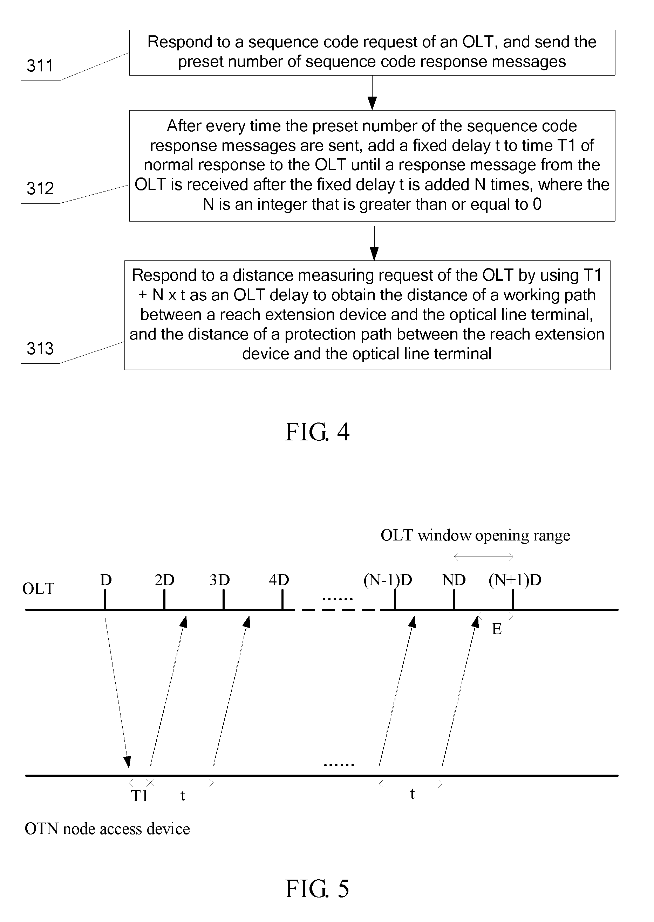

Specifically, in the process of establishing a PON system network, a logical distance of the OLT may be set to a relatively large value, for example, be set to a value 10% to 20% greater than that of the working path or the protection path, or be directly set to a furthest distance that the OLT can support. The method for obtaining the distance of the working path between the reach extension device and the OLT, and the distance of the protection path between the reach extension device and the OLT may include: manually measuring the distance of the working path and the distance of the protection path in the engineering cable layout process of establishing the PON system network; sending, by an OLT node access device or an OTN node access device, a flag to the working path and the protection path at the same time, and then obtaining the distance of the working path and the distance of the protection path through calculating a time difference of receiving the two flags on the OLT node access device or the OTN node access device; responding, on the OTN node access device by an ONU, to a sequence code request of the OLT, and then after a response message of the OLT is received, further obtaining the distance of the working path and the distance of the protection path through responding to a distance measuring request of the OLT. As shown in FIG. 4, the method may specifically include the following steps:

Step 311: Respond to the sequence code request of the OLT, and send the preset number of sequence code response messages.

Specifically, the OTN node access device responds to the sequence code request of the OLT, and sends the sequence code response messages. In order that the sequence code response messages can fall in a window opening range of the OLT, the preset number may be set to three to five sequence code response messages being sent each time.

Step 312: After the preset number of the sequence code response messages are sent every time, add a fixed delay t to the time T1 of normal response to the OLT until after the fixed delay t is added N times, a response message from the OLT is received; the N is an integer that is greater than or equal to 0.

Specifically, if no sequence code configuration message of the OLT is received after the OTN node access device sends the preset number of the sequence code response messages, it is considered that the sequence code response messages that are sent by the OTN node access device does not fall in the window opening range of the OLT. As shown in FIG. 5, when the sequence code response messages does not fall in the window opening range of the OLT, add a fixed delay t to the time T1 required for normally responding to the OLT sequence code request to be a new sequence code response delay time (the time is defined as T1 + t; because the delay exists, T1 cannot fall in the window opening range of the OLT every time; a t needs to be added after each response; in order to save time for measuring a distance, t may be set to the time that corresponds to a maximum differential distance which is supported by the OLT.) Until after t is added N times, the OTN node access device receives the sequence code configuration message of the OLT. At this time, the sequence code response messages that is sent by the OTN node access device fall in the window opening range of the OLT, and then the sequence code response delay time that is finally obtained is T1 + N x t, where the N is an integer that is greater than or equal to 0.

Step 313 : Respond to the distance measuring request of the OLT by using T1 + N x t as an OLT delay to obtain the distance of the working path between the reach extension device and the optical line terminal, and the distance of the protection path between the reach extension device and the optical line terminal.

Specifically, the OTN node access device responds, according to the sequence code response delay time T1 + N x t that is finally obtained, to the distance measuring request of the OLT, obtains an equalization delay E that is allocated by the OLT, and then sends buffer time Td to calculate the distance of the working path between the reach extension device and the optical line terminal, and the distance of the protection path between the reach extension device and the optical line terminal, where Td = T1 + (N - 1) x t + E.

Step 32: Compare the distance of the working path and the distance of the protection path to obtain a path with a shorter distance and a path with a longer distance.

Specifically, after the distance of the working path between the reach extension device and the OLT, and the distance of the protection path between the reach extension device and the OLT are obtained, the distance of the working path and the distance of the protection path will be compared first and the path with the shorter distance will be used as a delay target.

Step 33: On the reach extension device, perform a delay T for data on the path with the shorter distance, so that the time that the data passes through the path with the shorter distance is the same as the time that the data passes through the path with the longer distance.

Specifically, after the path with the shorter distance is obtained, perform the delay T for the data on the path with the shorter distance, so that the time that the data passes through the path with the shorter distance is the same as the time that the data passes through the path with the longer distance. For example, the distance of the protection path is 1 km shorter than the distance of the working path, therefore perform a delay for the data transmitted on the protection path so that the time that the transmitted data transfers on the protection path is the same as the time that the data transfers on the longer working path, thereby meeting the purpose of keeping consistency between the working path and the protection path in a reach extension process of the PON system.

Further, when the distance of the working path or the protection path changes, uplink data further needs to be adjusted or the distance of the working path or the protection path needs to be remeasured. Specifically, the following steps may be further included:

Step 34: When protection switching occurs, the reach extension device performs or removes buffer of the delay T for the uplink data to complete the protection switching for the uplink data.

Specifically, when the working path or the protection path encounters a relatively great change, the protection switching occurs. At this time, the working path or the protection path between the reach extension device and the OLT changes. Therefore, the configured buffer in a data transmission process also needs to change. For example, if the working path of the uplink data that is performed the delay T by the reach extension device is reduced by 1 km, the buffer for the working path of the uplink data needs to be removed; if the working path of the uplink data is increased by 1 km, the buffer for the working path of the uplink data needs to be increased.

Step 35: When the distance of the working path or the protection path encounters a change that is smaller than a preset value, the reach extension device adjusts, through detecting a position change of a frame header of the uplink data, a frame freezing window of the uplink data on the reach extension device, and adjusts the distance of the working path and the distance of the protection path so that the distance of the working path and the distance of the protection path are the same after the delay T passes.

Specifically, due to reasons such as fiber aging, the working path or the protection path encounters a change that is smaller than the preset value (the preset value may be set to 1 km), and a length of the working path or the protection path needs to be remeasured. The reach extension device may detect the position change of the frame header of the uplink data to adjust the frame freezing window of the uplink data on the reach extension device, and adjust the distance of the working path and the distance of the protection path so that the distance of the working path and the distance of the protection path are the same after the delay T passes.

Step 36: When the distance of the working path or of the protection path encounters a change that is greater than the preset value, the reach extension device obtains the distance of the working path or of the protection path through remeasuring.

Specifically, if the protection path encounters a change that is greater than the preset value (the preset value may be set to 1 km) due to reasons such as adding a node, deleting a node, or replacing a device, the method described in step 31 may be used to remeasure the length of the protection path. If the working path encounters a change that is greater than the preset value (the preset value may be set to 1 km) due to reasons such as adding a node, deleting a node, or replacing a device, and then the protection switching occurs, the method of step 31 may also be used to remeasure the length of the working path.

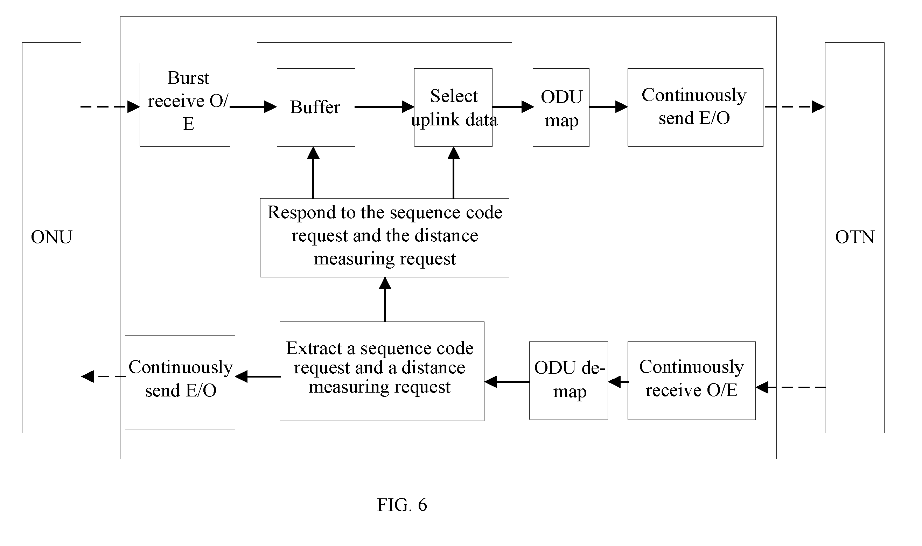

In a relatively common-used TDM-PON (Time Division Multiplex PON, time division multiplex passive optical network) system in the prior art, to be compatible with existing GPON devices as much as possible, and to avoid too high cost of reach extension, this embodiment provides only technical solutions for improving the reach extension device. Uplink data and downlink data that are transmitted through the reach extension device and between the OTN and the ONU, as shown in FIG. 6, may include signals that are sent by the OLT through the OTN to the ONU and signals that are sent by the ONU through the OTN to the OLT. The signals that are sent by the OLT through the OTN to the ONU includes: continuously receiving O/E, performing optical-to-electrical conversion, and receiving the downlink data; ODU (Optical Distribution Unit, optical distribution unit) demapping: demapping downlink GTC (Gigabit PON Transmission Convergence, transmission convergence layer) data from the ODU; extracting the sequence code request and the distance measuring request: extracting the sequence code request and the distance measuring request from the downlink GTC data; and continuously sending E/O to send the downlink GTC data through electrical-to-optical conversion to the ONU. The process of sending signals by the ONU through the OTN to the OLT includes: burst receiving optical O/E, performing optical power adjustment and optical-to-electrical conversion, and performing amplification and shaping; buffering: buffering uplink GTC data by using the Td obtained in step 313; responding to the sequence code request and the distance measuring request: responding to the sequence code request and the distance measuring request of the OLT through delay compensation; selecting the uplink data: choosing to send the uplink data or response data of the ONU according to a distance measuring state of the reach extension device; ODU mapping: mapping the uplink GTC data into the ODU; continuously sending E/O: sending the ODU data through the electrical-to-optical conversion to the OLT.

In the embodiment of the present invention, through obtaining the distance of the working path between the reach extension device and the OLT, and the distance of the protection path between the reach extension device and the OLT, and performing the delay for the data on the path with the shorter distance, it is realized that the lengths of the working path and the protection path are flexibly adjusted in the PON system, and in a process of XPON reach extension, when a differential distance between the ONU and the OLT exceeds 20 km, an XPON network can be used normally; further through obtaining the lengths of the working path and the protection path through re-detecting in the protection switching process, it is realized that the ONU can register successfully in a case that OLT configuration does not change, thereby improving the flexibility of adjusting an XPON system, and reducing the time consumed by the protection switching process; in addition, in this embodiment, the protection switching on the OTN in an XPON over OTN network can be supported by merely improving the reach extension device of the XPON system without changing the currently existing configuration of the OLT and the ONU, which has the features of simple implementation and low cost.

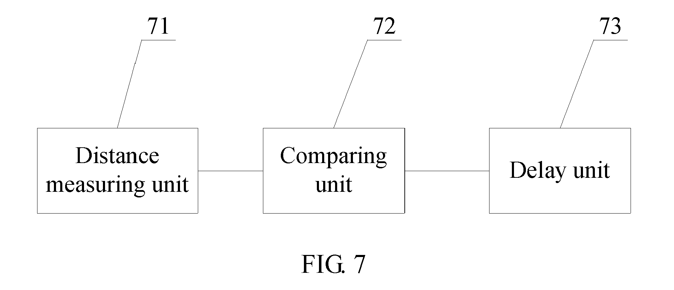

An embodiment of the present invention further provides a device for PON reach extension, as shown in FIG. 7, where the device may specifically includes a distance measuring unit 71, a comparing unit 72, and a delay unit 73. The distance measuring unit 71 is configured to obtain the distance of a working path between a reach extension device and an OLT, and the distance of a protection path between the reach extension device and the OLT; the comparing unit 72 is configured to compare the distance of the working path and the distance of the protection path to obtain a path with a shorter distance and a path with a longer distance; and the delay unit 73 is configured to perform a delay T, on the reach extension device, for data on the path with the shorter distance, so that the time that the data passes through the path with the shorter distance is the same as the time that the data passes through the path with the longer distance.

Further, the distance measuring unit may specifically include a response sending unit, a delay adjusting unit, and a reach extension configuring unit. The response sending unit is configured to respond to a sequence code request of the OLT, and send the preset number of sequence code response messages; the delay adjusting unit is configured to, after every time the preset number of the sequence code response messages are sent, add a fixed delay t to the time T1 of normal response to the OLT until after the fixed delay t is added N times, a response message of the OLT is received, where the N is an integer that is greater than or equal to 0; the reach extension configuring unit is configured to respond to a distance measuring request of the OLT by using T1 + Nt as an OLT delay to obtain the distance of the working path between the reach extension device and an optical line terminal, and the distance of the protection path between the reach extension device and the optical line terminal.

In addition, the delay unit 73 may specifically include a switching protecting unit, which is configured to, when protection switching occurs, perform or remove, by the reach extension device, buffer of the delay T for uplink data to complete the protection switching for the uplink data.

In addition, the device for the PON reach extension may further include a first path remeasuring unit and a second path remeasuring unit. The first path remeasuring unit is configured to, when the distance of the working path or of the protection path encounters a change that is smaller than a preset value, adjust, by the reach extension device, through detecting a position change of a frame header of the uplink data, a frame freezing window of the uplink data on the reach extension device, and adjust the distance of the working path and the distance of the protection path so that the distance of the working path and the distance of the protection path are the same after the delay T passes; the second path remeasuring unit is configured to, when the distance of the working path or of the protection path encounters a change that is greater than the preset value, obtain, by the reach extension device, the distance of the working path or of the protection path through remeasuring.

The specific implementation manners for the processing functions of each unit included in the foregoing device are described in the foregoing method embodiment, which are not repeatedly described here again.

Persons killed in the art may understand that all or a part of the process of the method in the foregoing embodiment may be implemented by a computer program instructing relevant hardware. The program may be stored in a computer readable storage medium. When being executed, the program may include the processes of the foregoing method embodiment. The storage medium may be a magnetic disk, a compact disk, a read-only memory (Read-Only Memory, ROM), or a random access memory (Random Access Memory, RAM), and so on.

The foregoing descriptions are merely exemplary and specific embodiments of the present invention, but not intended to limit the protection scope of the present invention. Changes or replacements that can be easily thought of by persons skilled in the prior art within the technical scope of the present invention should fall within the protection scope of the present invention. Therefore, the protection scope of the present invention should be subject to the protection scope of the claims.

## Claims

1. A method for PON reach extension, where the method comprises:
obtaining the distance of a working path between a reach extension device and an optical line terminal OLT, and the distance of a protection path between the reach extension device and the optical line terminal OLT;
comparing the distance of the working path and the distance of the protection path to obtain a path with a shorter distance and a path with a longer distance; and
on the reach extension device, performing a delay T for data on the path with the shorter distance, so that the time that the data passes through the path with the shorter distance is the same as the time that the data passes through the path with the longer distance.

2. The method according to claim 1, wherein a process of the obtaining the distance of the working path between the reach extension device and the optical line terminal, and the distance of the protection path between the reach extension device and the optical line terminal specifically comprises:
responding to a sequence code request of the OLT, and sending the preset number of sequence code response messages;
after every time the preset number of the sequence code response messages are sent, adding a fixed delay t to time T1 of normal response to the OLT until after the fixed delay t is added N times, a response message of the OLT is received, wherein the N is an integer that is greater than or equal to 0; and
responding to a distance measuring request of the OLT by using T1 + N x t as an OLT delay to obtain the distance of the working path between the reach extension device and the optical line terminal, and the distance of the protection path between the reach extension device and the optical line terminal.

3. The method according to claim 1, wherein a step of the performing the delay T for the data on the path with the shorter distance is specifically:
when protection switching occurs, the reach extension device performs or removes buffer of the delay T for uplink data to complete the protection switching for the uplink data.

4. The method according to claim 3, further comprising:
when the distance of the working path or of the protection path encounters a change that is smaller than a preset value, adjusting, by the reach extension device, through detecting a position change of a frame header of the uplink data, a frame freezing window of the uplink data, and adjusting the distance of the working path and the distance of the protection path so that the distance of the working path and the distance of the protection path are the same after the delay T passes.

5. The method according to any one of claims 1 to 3, further comprising:
when the distance of the working path or of the protection path encounters a change that is greater than a preset value, obtaining, by the reach extension device, the distance of the working path or of the protection path through remeasuring.

6. A device for PON reach extension, where the device comprises:
a distance measuring unit, configured to obtain the distance of a working path between a reach extension device and an OLT, and the distance of a protection path between the reach extension device and the OLT;
a comparing unit, configured to compare the distance of the working path and the distance of the protection path to obtain a path with a shorter distance and a path with a longer distance; and
a delay unit, configured to, on the reach extension device, perform a delay T for data on the path with the shorter distance, so that the time that the data passes through the path with the shorter distance is the same as the time that the data passes through the path with the longer distance.

7. The device according to claim 6, wherein the distance measuring unit specifically comprises:
a response sending unit, configured to respond to a sequence code request of the OLT, and send the preset number of sequence code response messages;
a delay adjusting unit, configured to, after every time the preset number of sequence code response messages are sent, add a fixed delay t to time T1 of normal response to the OLT until after the fixed delay t is added N times, a response message of the OLT is received, wherein the N is an integer that is greater than or equal to 0; and
a reach extension configuring unit, configured to respond to a distance measuring request of the OLT by using T1 + N x t as an OLT delay to obtain the distance of the working path between the reach extension device and the optical line terminal, and the distance of the protection path between the reach extension device and the optical line terminal.

8. The device according to claim 6, wherein the delay unit specifically comprises:
a switching protecting unit, configured to, when protection switching occurs, perform or remove buffer of the delay T for uplink data to complete the protection switching for the uplink data.

9. The device according to claim 8, further comprising:
a first path remeasuring unit, configured to, when the distance of the working path or of the protection path encounters a change that is smaller than a preset value, adjust, through detecting a position change of a frame header of the uplink data, a frame freezing window of the uplink data on the reach extension device, and adjust the distance of the working path and the distance of the protection path so that the distance of the working path and the distance of the protection path are the same after the delay T passes.

10. The device according to any one of claims 6 to 8, further comprising:
a second path remeasuring unit, configured to, when the distance of the working path or of the protection path encounters a change that is greater than a preset value, obtain, by the reach extension device, the distance of the working path or of the protection path through remeasuring.
